# FASCICULE DE BREVET EUROPEEN

(11) **EP 3 881 424 B1**
(45) Date de publication et mention de la délivrance du brevet: **28.12.2022**
(21) Numéro de dépôt: 19798661.5
(22) Date de dépôt: 12.11.2019
(51) Int. Cl.: H02M 7/5395, H02P 27/08, H02M 1/00

(54) **PROCEDE DE COMMANDE POUR CONVERTISSEUR DE PUISSANCE, SYSTEME ET DISPOSITIF ASSOCIES**
VERFAHREN ZUR STEUERUNG EINES STROMRICHTERS, ZUGEHÖRIGES SYSTEM UND VORRICHTUNG
METHOD OF CONTROL FOR POWER CONVERTER, ASSOCIATED SYSTEM AND DEVICE

(30) Priorité: 14.11.2018 FR 1860477
(43) Date de publication de la demande: 22.09.2021
(73) Titulaire: GE Energy Power Conversion Technology Ltd, RUGBY Warwickshire CV21 1BD (GB)
(72) Inventeur: EL JIHAD, Hamza, 91140 VILLEBON SUR YVETTE (FR); SAVARIT, Elise, 91300 MASSY (FR); SIALA, Sami, 91140 VILLEBON SUR YVETTE (FR)
(74) Mandataire: Serjeants LLP
(86) Numéro de dépôt international: PCT/EP2019/080981
(87) Numéro de publication internationale: WO 2020/099377

(56) Documents cités:
- US-A1- 2009 179 608
- BRIAN A WELCHKO ET AL: "Effects and Compensation of Dead-Time and Minimum Pulse-Width Limitations in Two-Level PWM Voltage Source Inverters", THE 2006 IEEE INDUSTRY APPLICATIONS CONFERENCE FORTY-FIRST IAS ANNUAL MEETING, CONFERENCE RECORD OF, IEEE, PISCATAWAY, NJ, US, 1 octobre 2006 (2006-10-01), pages 889-896, XP031026133, ISBN: 978-1-4244-0364-6

## Description

La présente invention concerne la commande en tension d'un convertisseur de puissance et concerne plus particulièrement un procédé d'optimisation d'une commande d'un convertisseur de puissance polyphasé, un dispositif de mise en œuvre du procédé et un système de commande en tension comprenant le dispositif.

Les convertisseurs de puissance comprennent des composants semi-conducteurs de puissance, généralement des transistors à effet de champ.

Des convertisseurs de puissance sont connus des documents suivants: US2009/179608 et : BRIAN A WELCHKO ET AL: "Effects and Compensation of Dead-Time and Minimum Pulse-Width Limitations in Two-Level PWM Voltage Source Inverters",THE 2006 IEEE INDUSTRY APPLICATIONS CONFERENCE FORTY-FIRST IAS ANNUAL MEETING, CONFERENCE RECORD OF, IEEE, PISCATAWAY, NJ, US, 1 octobre 2006 (2006-10-01), pages 889-896, ISBN: 978-1-4244-0364-6.

Des caractéristiques physiques intrinsèques aux semi-conducteurs imposent une durée minimale de conduction ou de blocage pendant laquelle le semi-conducteur de puissance doit rester dans un état passant ou bloqué pour éviter sa destruction.

Par exemple pour un transistor bipolaire à grille isolé connu sous l'acronyme anglais IGBT (« insulated gate bipolar transistor »), la durée minimale de conduction ou de blocage varie de 5 à 30 µs.

Les algorithmes actuels de contrôle des convertisseurs de puissance en tension, notamment les algorithmes de contrôle de type à modulation de largeur d'impulsion MLI, interdisent toute durée de commutation inférieure à la durée minimale, par exemple en modifiant la valeur de commande d'une phase dont la durée de commutation des semi-conducteurs est inférieure à la durée minimale de manière à modifier la largeur de l'impulsion associée.

Une valeur calculée à partir d'une valeur prédéfinie est rajoutée ou retranchée à la valeur de consigne de pilotage ou à la durée de l'impulsion associée à la consigne de pilotage de la phase de manière à annuler ou augmenter la durée de conduction des semi-conducteurs.

En effet, il est préférable que le composant semi-conducteur soit bloqué au lieu de conduire pendant une durée inférieure à sa durée minimale de conduction.

Un abaque dépendant de la technologie des semi-conducteurs peut être utilisé pour déterminer les valeurs prédéfinies en fonction de la valeur de pilotage ou de la durée de l'impulsion associée.

Cependant, l'ajout ou la soustraction de la valeur prédéfinie à la consigne de pilotage en tension d'une phase provoque généralement une distorsion de la tension de sortie du convertisseur de puissance par rapport à la tension de référence sans intervention des algorithmes de contrôle.

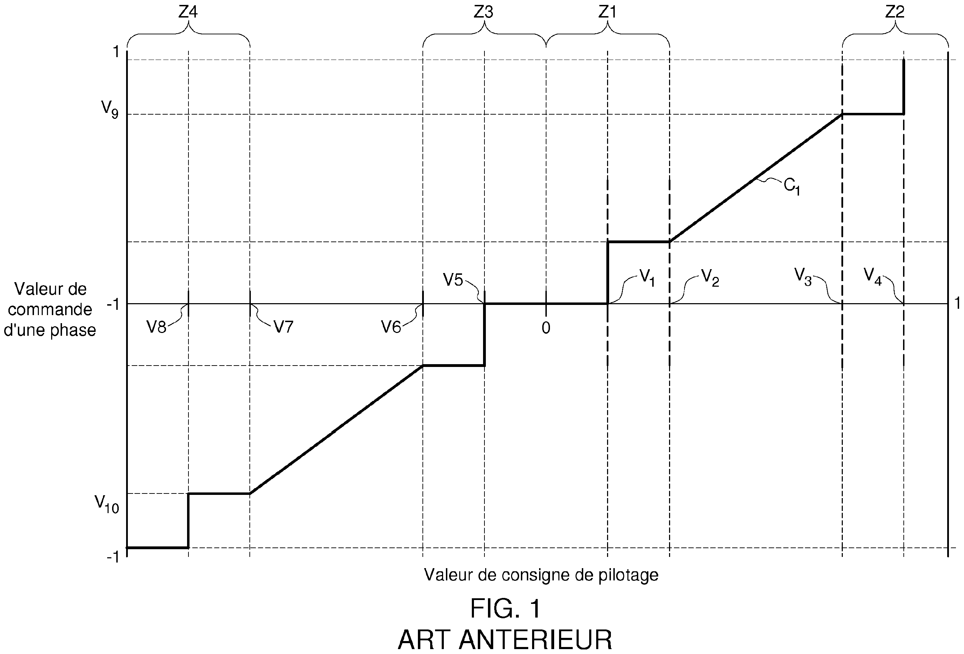

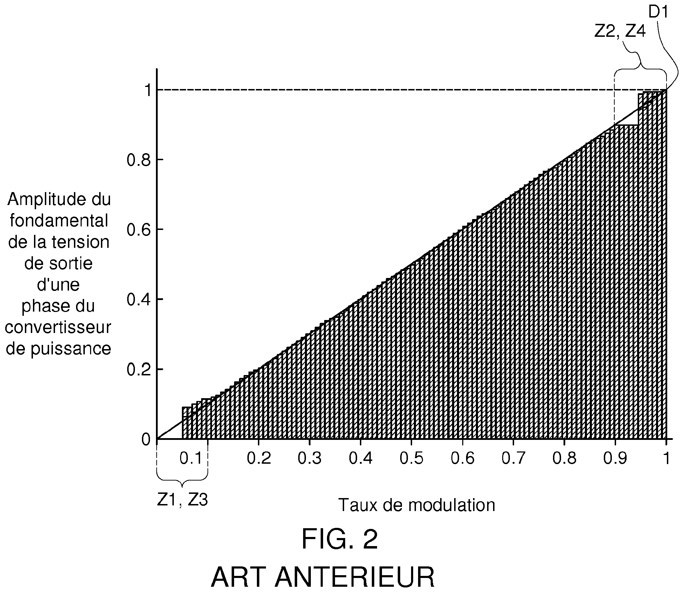

On se réfère aux figures 1 et 2 qui illustrent respectivement un exemple d'un abaque ABQ de correction de la valeur d'un signal de référence de commande d'une phase et un exemple d'amplitude du fondamental de la tension d'une phase en sortie du convertisseur en fonction du taux de modulation.

On se réfère plus particulièrement à la figure 1.

La valeur de commande d'une phase est déterminée selon la valeur de consigne de pilotage initiale en fonction d'une courbe C1 normalisée.

La courbe C1 est symétrique par rapport à une valeur nulle du signal de commande. On se focalise sur les valeurs positives du signal de référence.

Si la valeur de consigne de pilotage se situe dans les intervalles [0, V2] (zone Z1) ou [V3, 1] (zone Z2), la valeur de commande n'est plus proportionnelle à la valeur de consigne de pilotage initiale.

Les zones Z1 et Z2 de non linéarité provoquent un fonctionnement non optimal du convertisseur de puissance dans ces deux intervalles de valeur de commande.

Si la valeur de consigne de pilotage se situe en dehors de ces intervalles, la valeur de commande est proportionnelle au signal de référence. La commande est linéaire.

Par symétrie, les zones Z3 et Z4 définies par les intervalles [V6, 0] et [-1, V7] sont des zones de non linéarité.

Les zones Z1, Z2, Z3 et Z4 comprennent chacune un point intermédiaire V1, V4, V5 et V8 lorsque la courbe C1 présente un échelon.

Les valeurs V1, V2, V3 et V4 sont positives et les valeurs V5, V6, V7 et V8 sont négatives.

Par exemple, V2 est égale à -V6, V3 est égale à -V7, V1 est égale à V2/2, V4 est égale à 1-V2/2, V5 est égale à V6/2 et V8 est égale à -1+V6/2.

Bien entendu, pour certaines applications, notamment des applications multi-niveaux, l'abaque ABQ peut comprendre plus de trois zones de non-linéarités réparties sur la courbe C1.

L'allure et la pente de la courbe C1 dans lesdites zones de non-linéarités peuvent être différentes d'une zone à une autre.

Sur la figure 2, la droite D1 représente un fonctionnement optimal du convertisseur de puissance lorsque l'amplitude du fondamental est proportionnelle au taux de modulation, lorsque la valeur de consigne de pilotage ne se situe dans aucune des zones Z1, Z2, Z3 et Z4.

Cependant, on retrouve les zones de non linéarité Z1, Z2, Z3 et Z4 où l'amplitude du fondamental n'est plus proportionnelle à la consigne en taux de modulation.

Un fonctionnement du convertisseur dans l'une de ces zones de non linéarité entraîne une baisse du rendement du convertisseur.

Comme la tension de sortie d'une phase est modifiée dans les zones de non linéarité Z1, Z2, Z3 et Z4, il apparaît des distorsions dans les tensions d'alimentation générées par le convertisseur.

La valeur de la tension entre les phases n'est plus constante. Par conséquent, le système de tensions en sortie du convertisseur n'est plus équilibré et des harmoniques apparaissent.

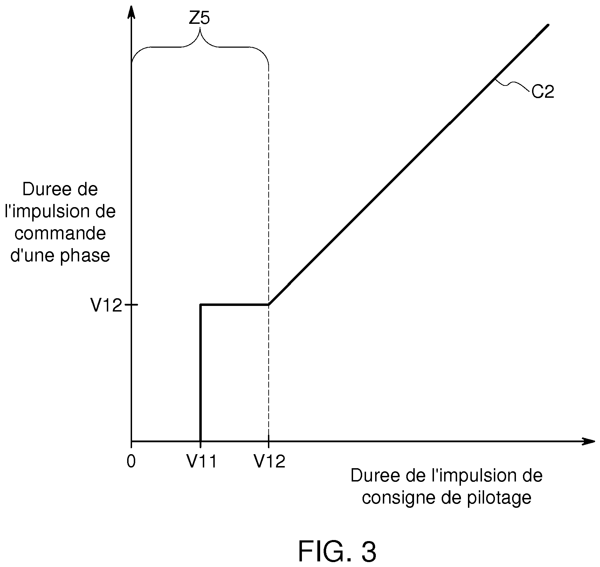

La figure 3 illustre un exemple d'un abaque ABQ1 de commande d'une phase selon la durée de l'impulsion associée à une valeur de consigne de pilotage.

La durée de l'impulsion de commande d'une phase est déterminée selon la durée de l'impulsion de consigne de pilotage initiale en fonction d'une courbe C2 normalisée.

Si la durée de l'impulsion de la consigne de pilotage se situe dans l'intervalle [0, V12] (zone Z5), la durée de l'impulsion de commande n'est plus proportionnelle à la durée de l'impulsion de consigne de pilotage initiale.

Comme décrit précédemment, il apparaît des distorsions dans les tensions d'alimentation générées par le convertisseur.

Il est donc proposé de pallier les inconvénients liés à la commande d'un convertisseur de puissance commandé en tension selon l'état de la technique, notamment en réduisant les zones de fonctionnement non-linéaire du convertisseur de puissance et en ajustant la largeur des impulsions des tensions de sortie du convertisseur de sorte que le système de tension en sortie du convertisseur soit sensiblement équilibré.

Au vu de ce qui précède, il est proposé, selon un premier aspect tel que défini dans la revendication 1, un procédé de commande d'un convertisseur de puissance polyphasé piloté par un algorithme du type modulation de largeur d'impulsion.

Il est proposé, selon un autre aspect, un système d'optimisation d'une commande pour convertisseur de puissance polyphasé.

Il comprend des moyens pour mettre en œuvre un procédé de commande tel que défini précédemment de sorte que le convertisseur de puissance polyphasé délivre un système de tensions sensiblement équilibré.

Il est proposé, selon encore un autre aspect, un système de commande en tension d'un convertisseur de puissance polyphasé pour la mise en œuvre d'un procédé tel que défini précédemment.

Il comprend un dispositif de régulation apte à générer pour chaque phase une valeur de consigne de pilotage, un système d'optimisation de commande recevant une valeur de consigne de pilotage délivrée par le dispositif de régulation et apte à commander le convertisseur, le système d'optimisation délivrant une valeur de pilotage élaborée à partir de la valeur de consigne de pilotage de sorte que le convertisseur de puissance polyphasé délivre un système de tension sensiblement équilibré.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- la figure 1, dont il a déjà été fait mention, illustre un exemple d'abaque de correction de la valeur d'un signal de référence de commande d'une phase ;
- la figure 2, dont il a déjà été fait mention, illustre un exemple d'amplitude du fondamental de la tension d'une phase en sortie du convertisseur en fonction du taux de modulation ;
- la figure 3, dont il a déjà été fait mention, illustre un exemple d'abaque de correction de la durée de l'impulsion associée à un signal de référence de commande d'une phase;
- la figure 4 illustre un mode de réalisation d'un système de commande en tension d'un convertisseur de puissance polyphasé ;
- la figure 5 illustre un premier mode de réalisation d'un dispositif d'optimisation ;
- la figure 6 illustre un deuxième mode de réalisation d'un dispositif d'optimisation ;
- la figure 7 illustre un exemple de mise en œuvre d'un algorithme de commande en tension d'un convertisseur de puissance polyphasé; et
- la figure 8 illustre l'amplitude du fondamental de la tension d'une phase en sortie du convertisseur en fonction du taux de modulation avec l'algorithme proposé par cette invention.

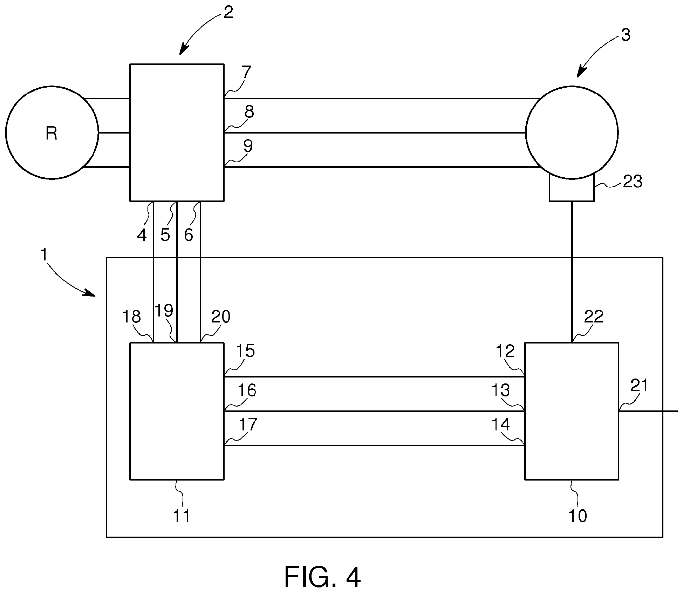

On se réfère à la figure 4 qui illustre un mode de réalisation d'une alimentation électrique d'une charge, constituée ici par un moteur électrique, comprenant un système de commande 1 en tension et un convertisseur de puissance polyphasé commandé en tension par le système de commande et alimentant la charge 3.

Le convertisseur de puissance 2 est par exemple un convertisseur triphasé.

Le convertisseur de puissance 2 comprend un circuit de puissance relié à un réseau triphasé d'alimentation électrique R.

Le convertisseur 2 comprend avantageusement des composants de commutation à semi-conducteurs, par exemple des transistors IGBT.

Le convertisseur 2 comprend trois entrées de commande 4, 5 et 6 assurant la commande de la commutation des composants semi-conducteurs. Ces entrées sont reliées au système de commande 1 et pilotent des sorties respectives 7, 8 et 9 du convertisseur 2 reliées au moteur 3, chaque sortie correspondant à une phase du système de tensions de sortie du convertisseur.

Le système de commande 1 comprend un dispositif de régulation 10 relié à un système d'optimisation 11.

Le dispositif de régulation 10 comprend trois sorties 12, 13 et 14 reliées à des entrées respectives 15, 16 et 17 du système d'optimisation 11.

Les sorties 18, 19 et 20 du système d'optimisation 11 sont reliées respectivement aux entrées de commande 4, 5 et 6 du convertisseur 2.

Le dispositif de régulation 10 élabore une valeur de consigne de pilotage pour chacune des phases 7, 8 et 9 du convertisseur 2 à partir d'une consigne reçue sur une première entrée 21 et de mesures reçues sur une deuxième entrée 22. Il comprend une boucle de régulation apte à piloter le moteur 3 à partir de la consigne, par exemple une consigne en couple.

Les mesures reçues en entrée du dispositif de régulation sont issues de moyens de mesure 23 équipant le moteur 3.

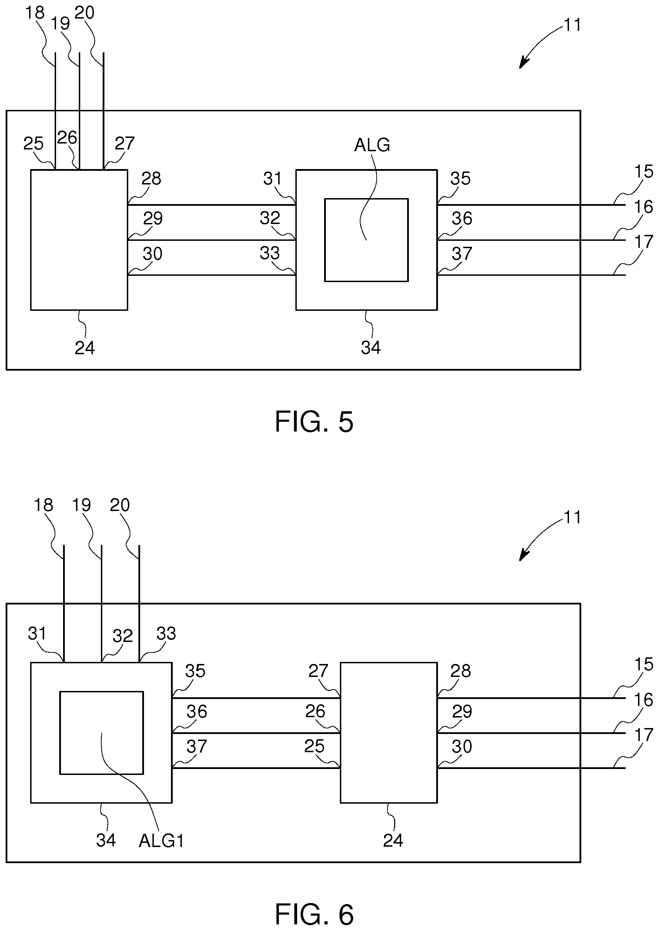

La figure 5 illustre un premier mode de réalisation du système d'optimisation 11.

Le système d'optimisation 11 comprend un dispositif de pilotage du convertisseur 24 et un dispositif d'optimisation 34.

Le dispositif de pilotage 24 comprend trois sorties 25, 26 et 27 reliées respectivement aux sorties 18, 19 et 20 du système d'optimisation 11, et trois entrées 28, 29 et 30 reliées respectivement aux sorties 31, 32 et 33 du dispositif d'optimisation 34.

Le dispositif d'optimisation 34 comprend trois entrées 35, 36, et 37 reliées respectivement aux entrées 15, 16 et 17 du système d'optimisation 11.

Le dispositif de pilotage 24 génère pour chacune des phases 7, 8 et 9 une valeur de commande à partir des valeurs de pilotage déterminées par le dispositif d'optimisation 34 selon la technique de la modulation de largeur d'impulsion MLI. Les signaux reçus sur les entrées 28, 29 et 30 du dispositif de pilotage 24 sont ainsi les signaux modulants de commande du convertisseur 2.

Le dispositif d'optimisation 34 met en œuvre un algorithme ALG d'optimisation ayant pour fonction d'optimiser la commande en tension du convertisseur de puissance 2 pour que chacune de ses sorties 31, 32 et 33 délivre une valeur de pilotage telle que le convertisseur 2 délivre un système de tensions sensiblement équilibré.

Par sensiblement équilibré, on entend que les valeurs des trois tensions entre phases du système de tension triphasé soient égales à une tolérance près et déphasées de 2π/3 entre elles.

Pour se faire, l'algorithme ALG modifie un paramètre de commande comprenant une valeur de consigne de pilotage d'au moins une phase située dans une zone de non linéarité de l'abaque ABQ en modifiant la valeur dudit paramètre de sorte qu'il soit dans une zone de linéarité de l'abaque ABQ et il modifie une valeur de consigne de pilotage de chacune des phases de la même manière.

Le dispositif d'optimisation 34 est par exemple réalisé à partir d'une unité de traitement comprenant un microprocesseur. Il peut toutefois s'agir de tout dispositif apte à mettre en œuvre l'algorithme ALG.

Dans ce qui suit, les éléments identiques à ceux décrits précédemment sont désignés par les mêmes références numériques.

On se réfère à la figure 6 qui décrit un deuxième mode de réalisation du système d'optimisation 11.

On retrouve les dispositifs de pilotage du convertisseur 24 et d'optimisation 34.

Les sorties 31, 32 et 33 du dispositif d'optimisation 34 sont reliées respectivement aux sorties 18, 19 et 20 du système d'optimisation 11, et les entrées 35, 36, et 37 du dispositif d'optimisation 34 sont reliées respectivement aux sorties 25, 26 et 27 du système d'optimisation 24.

Les entrées 28, 29 et 30 du dispositif de pilotage 24 sont reliées respectivement aux entrées 15, 16 et 17 du système d'optimisation 11.

Le dispositif d'optimisation 34 met en œuvre un algorithme ALG1 d'optimisation ayant pour fonction d'optimiser la commande en tension du convertisseur de puissance 2 pour que chacune de ses sorties 31, 32 et 33 délivre une valeur de pilotage telle que le convertisseur 2 délivre un système de tensions sensiblement équilibré.

Pour ce faire, l'algorithme ALG1 modifie un paramètre de commande comprenant une durée d'impulsion associée à une valeur de consigne de pilotage d'au moins une phase située dans une zone de non linéarité de l'abaque ABQ1 en modifiant la valeur dudit paramètre de sorte qu'il soit dans une zone de linéarité de l'abaque ABQ1 et il modifie une durée d'impulsion associée à une valeur de consigne de pilotage de chacune des phases de la même manière.

Les algorithmes ALG et ALG1 diffèrent en ce que l'algorithme ALG modifie au moins une valeur de consigne de pilotage située dans un domaine non-linéaire de l'abaque ABQ et l'algorithme ALG1 modifie au moins une durée d'impulsion associée à une valeur de consigne de pilotage située dans un domaine non-linéaire de l'abaque ABQ1.

Les algorithmes ALG et ALG1 fonctionnent de la même manière en traitant chacun un paramètre de commande du convertisseur différent et en exploitant des abaques différents.

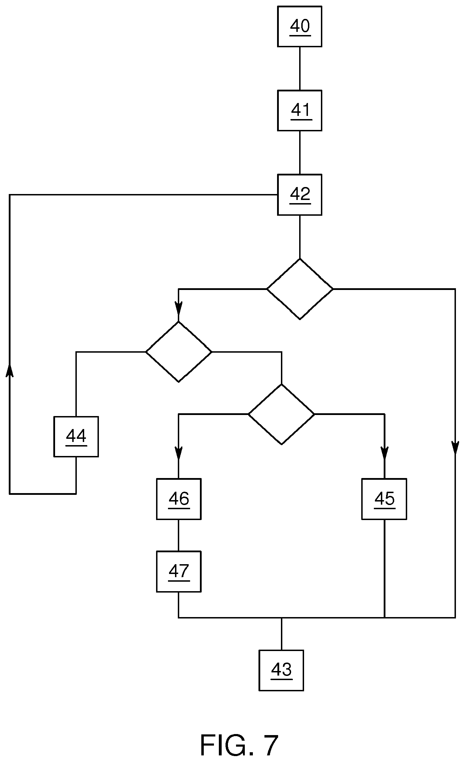

On se réfère à présent à la figure 7 qui représente un exemple de mise en œuvre de l'algorithme ALG d'optimisation de la commande en tension du convertisseur de puissance polyphasé.

La mise en œuvre de l'algorithme ALG1 est identique à celle de l'algorithme ALG en remplaçant les valeurs de consigne de pilotage par les durées des impulsions associées aux valeurs de consigne de pilotage et en remplaçant l'abaque ABQ par l'abaque ABQ1.

On suppose qu'une valeur de consigne de pilotage d'au moins l'une des phases 7, 8 et 9 est située dans une zone de non linéarité Z1, Z2, Z3 ou Z4 de l'abaque ABQ.

On suppose ici que la valeur de consigne de pilotage de la phase 7 est située dans la zone de non-linéarité Z2.

Lors d'une première étape 40, le dispositif d'optimisation 34 détermine un ensemble de deux valeurs correctrices associées par l'abaque à la valeur de consigne de pilotage.

Pour la phase 7, le dispositif d'optimisation 34 retient les valeurs correctrices V3 et 1.

Par contre, lorsque la valeur de consigne de pilotage de chacune des trois phases est située dans une zone de non-linéarité, le dispositif d'optimisation 34 détermine six valeurs de commande, deux valeurs de commande étant associées à chaque phase.

Durant une deuxième étape 41, le dispositif d'optimisation 34 détermine un ensemble des écarts entre chacune des valeurs correctrices V3 et 1, et la valeur de consigne de pilotage.

A l'étape 42, le dispositif d'optimisation sélectionne la valeur correctrice associée à l'écart le plus faible.

Puis le dispositif d'optimisation détermine une valeur de pilotage pour chaque phase en retranchant l'écart associé à ladite valeur correctrice de la valeur de consigne de pilotage si la valeur correctrice est inférieure à la valeur de consigne de pilotage située dans une zone de non-linéarité ou en ajoutant l'écart associé à ladite valeur correctrice à la valeur de consigne de pilotage si la valeur correctrice est supérieure à la valeur de consigne de pilotage située dans une zone de non-linéarité.

Enfin, le dispositif d'optimisation détermine si chaque valeur de pilotage est située dans une zone de non linéarité de l'abaque ABQ.

Si toutes les valeurs de pilotage sont situées dans une zone de linéarité de l'abaque ABQ, lors d'une étape 43, le dispositif d'optimisation 34 transmet de nouveaux paramètres de commandes comprenant les valeurs de pilotage au dispositif de pilotage 24.

Lors de la mise en œuvre de l'algorithme ALG1, les valeurs de pilotage sont transmises directement aux entrées 4, 5 et 6 du convertisseur de puissance 2 comprenant un dispositif de pilotage.

Si la valeur de pilotage d'une phase se situe dans une zone de non linéarité de l'abaque ABQ et si il subsiste plus d'une valeur dans l'ensemble des écarts, durant une étape 44, le dispositif d'optimisation 34 supprime l'écart sélectionné précédemment dans l'étape 42.

On retourne ensuite à la troisième étape 42.

Si une valeur de pilotage d'une phase se situe dans une zone de non linéarité de l'abaque ABQ et si l'ensemble des écarts est vide, durant l'étape 45 suivante, le dispositif d'optimisation 34 sélectionne les paramètres de commande et calcule la valeur de pilotage de la phase en zone de non linéarité en retranchant l'écart le plus faible de la valeur de consigne de pilotage de la phase si la valeur correctrice associée à l'écart le plus faible est inférieure à la valeur de consigne de pilotage de la phase ou en ajoutant l'écart le plus faible à la valeur de consigne de pilotage de la phase si la valeur correctrice associée à l'écart le plus faible est supérieure à la valeur de consigne de pilotage de la phase.

Puis le dispositif d'optimisation 34 transmet la valeur de nouveaux paramètres de commande comprenant ladite valeur de pilotage et la valeur de consigne de pilotage de chacune des autres phases reçues du dispositif de régulation 10 au dispositif de pilotage 24.

Lors de la mise en œuvre de l'algorithme ALG1, le dispositif d'optimisation 34 transmet la valeur de pilotage directement aux entrées 4, 5 et 6 du convertisseur de puissance 2 comprenant un dispositif de pilotage.

Si au moins une valeur de pilotage d'au moins deux phases se situe dans une zone de non linéarité de l'abaque ABQ et si l'ensemble des écarts est vide, durant une étape 46, le dispositif d'optimisation 34 détermine quatre combinaisons différentes de valeurs correctrices.

Chaque combinaison forme un vecteur de pilotage.

Le dispositif d'optimisation 34 transforme chaque vecteur de pilotage en un vecteur bidimensionnel de pilotage et transforme un vecteur de paramètre de commande comprenant la valeur de consigne de pilotage de chacune des phases en un vecteur bidimensionnel de référence par exemple en utilisant la transformée de Clark.

Le dispositif d'optimisation 34 détermine l'erreur quadratique de chaque vecteur bidimensionnel de pilotage par rapport au vecteur bidimensionnel de référence et détermine le vecteur bidimensionnel de pilotage associé à la plus petite erreur.

Puis, dans une étape 47, le dispositif d'optimisation 34 transforme le vecteur bidimensionnel de pilotage associé à la plus petite erreur en un vecteur de paramètre de commande et transmet la combinaison des valeurs de consigne de pilotage au dispositif de pilotage 24.

Les algorithmes ALG et ALG1 sont mis en œuvre à chaque fois que l'une des valeurs de commande ou l'une des valeurs de pilotage d'une phase est située dans une zone de non-linéarité.

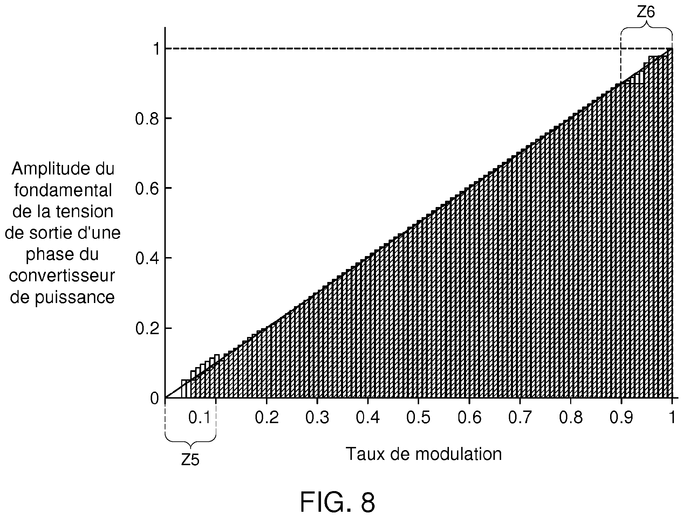

On se réfère à la figure 8 qui illustre un exemple d'amplitude du fondamental de la tension d'une phase 7, 8 et 9 en sortie du convertisseur en fonction du taux de modulation.

L'amplitude du fondamental de la tension d'une phase est proportionnelle au taux de modulation sur des plages Z5 et Z6 supplémentaires.

Avantageusement, la zone de fonctionnement linéaire du convertisseur de puissance a été étendue.

Le convertisseur de puissance est piloté de sorte que les tensions de sortie du convertisseur forment un système de tension en sortie du convertisseur équilibré ou sensiblement équilibré.

Par exemple, la zone de linéarité du taux de modulation est augmentée de 4 à 9%.

Par conséquent, la valeur des tensions de sortie du convertisseur est plus élevée dans les domaines inclus dans la zone de linéarité du taux de modulation.

A facteurs de puissance et intensité égaux, la valeur de la puissance électrique transmise par le convertisseur est plus élevée lors de l'utilisation du dispositif d'optimisation.

De plus, le dispositif d'optimisation fonctionne aussi lorsque de la puissance électrique est transférée de la charge électrique vers le réseau, par exemple lorsque le moteur 3 fonctionne en mode génératrice.

De préférence, lorsque le taux de modulation se situe dans une zone de non-linéarité située à proximité de la valeur nulle, on ajoute au signal modulant un signal homopolaire généralement carré de sorte que le paramètre de commande soit dans une zone de linéarité, et l'on modifie le paramètre de commande de chacune des phases de la même manière de manière à garantir la linéarité jusqu'à un taux de modulation nul.

Cette technique est connue sous les termes anglo-saxon « Toggle PWM».

## Revendications

1. Procédé de commande d'un convertisseur de puissance polyphasé piloté par un algorithme du type modulation de largeur d'impulsion, dans lequel on modifie un paramètre de commande comprenant une valeur de consigne de pilotage ou une durée d'impulsion associée à une valeur de consigne de pilotage d'au moins une phase (7, 8, 9) situé dans une zone de non linéarité d'un abaque (ABQ, ABQ1) qui associe une valeur de consigne de pilotage à une valeur de commande d'une phase ou qui associe une durée d'impulsion associée à une valeur de consigne de pilotage à une durée d'impulsion de commande d'une phase, en modifiant la valeur dudit paramètre de sorte qu'il soit dans une zone de linéarité de l'abaque, et on modifie le paramètre de commande de chacune des phases (7, 8, 9) de la même manière, **caractérisé en ce que** le procédé comprend :
a) une première étape (40) durant laquelle on détermine au moins une valeur correctrice associée par l'abaque (ABQ, ABQ1) au paramètre de commande ;
b) une deuxième étape (41) durant laquelle on détermine un ensemble d'écarts entre chacune des valeurs correctrices et le paramètre de commande ; et
c) une troisième étape (42) durant laquelle on sélectionne la valeur correctrice associée à l'écart le plus faible, on détermine une valeur de pilotage pour chaque phase en retranchant l'écart associé à ladite valeur correctrice du paramètre de commande si la valeur correctrice est inférieure au paramètre de commande situé dans une zone de non-linéarité ou en ajoutant l'écart associé à ladite valeur correctrice au paramètre de commande si la valeur correctrice est supérieure au paramètre de commande situé dans une zone de non-linéarité, et l'on détermine si chaque paramètre de commande est situé dans une zone de non linéarité de l'abaque (ABQ, ABQ1) ;
dans lequel si la valeur de pilotage de toutes les phases (7, 8, 9) est située dans une zone de linéarité de l'abaque (ABQ, ABQ1) durant une étape (43), on transmet des nouveaux paramètres de commande comprenant lesdites valeurs de pilotage à un dispositif de pilotage apte à commander le convertisseur polyphasé ;
dans lequel si la valeur de pilotage d'au moins une phase (7, 8, 9) se situe dans une zone de non linéarité de l'abaque (ABQ, ABQ1) et si il subsiste plus d'une valeur dans l'ensemble des écarts, durant une étape (44) on supprime l'écart sélectionné précédemment et on réitère ladite troisième étape c) ;
dans lequel si la valeur de pilotage d'une phase (7, 8, 9) se situe dans une zone de non linéarité de l'abaque (ABQ, ABQ1), et si l'ensemble des écarts est vide, durant une étape (45) on sélectionne les paramètres de commande et on calcule la valeur de pilotage de la phase en zone de non linéarité en retranchant l'écart le plus faible du paramètre de commande de la phase si la valeur correctrice associée à l'écart le plus faible est inférieure au paramètre de commande de la phase ou en ajoutant l'écart le plus faible au paramètre de commande de la phase si la valeur correctrice associée à l'écart le plus faible est supérieure au paramètre de commande de la phase, et l'on transmet des nouveaux paramètres de commande comprenant ladite valeur de pilotage et chaque paramètre de commande des autres phases à un dispositif de pilotage apte à commander le convertisseur polyphasée ;
dans lequel si un paramètre de commande d'au moins deux phases (7, 8, 9) se situe dans une zone de non linéarité de l'abaque (ABQ, ABQ1) et si l'ensemble des écarts est vide, durant une étape (46) on détermine des combinaisons différentes de valeurs correctrices formant chacune un vecteur de pilotage, on transforme chaque vecteur de pilotage en un vecteur bidimensionnel de pilotage, on transforme un vecteur de paramètres de commande comprenant le paramètre de commande de chacune des phases en un vecteur bidimensionnel de référence, on détermine l'erreur quadratique de chaque vecteur bidimensionnel de pilotage par rapport au vecteur bidimensionnel de référence et l'on détermine le vecteur bidimensionnel de pilotage associé à la plus petite erreur ; et
comprenant une étape (47) durant laquelle on transforme le vecteur bidimensionnel de pilotage associé à la plus petite erreur en un vecteur de paramètre de commande et on transmet la combinaison des paramètres de commande à un dispositif de pilotage apte à commander le convertisseur triphasé.

2. Système d'optimisation d'une commande (20) pour convertisseur de puissance (2) polyphasé, **caractérisé en ce qu'**il comprend des moyens pour mettre en œuvre un procédé de commande selon la revendication 1 de sorte que le convertisseur de puissance polyphasé délivre un système de tensions sensiblement équilibré.

3. Système de commande (1) en tension d'un convertisseur de puissance polyphasé pour la mise en œuvre d'un procédé selon la revendication 2, **caractérisé en ce qu'**il comprend un dispositif de régulation (10) apte à générer pour chaque phase une valeur de consigne de pilotage, un système d'optimisation de commande (20) recevant une valeur de consigne de pilotage délivrée par le dispositif de régulation et apte à commander le convertisseur (2), le système d'optimisation délivrant une valeur de pilotage élaborée à partir de la valeur de consigne de pilotage de sorte que le convertisseur de puissance polyphasé délivre un système de tension sensiblement équilibré.

## Patentansprüche

1. Verfahren zum Steuern eines mehrphasigen Stromrichters, der von einem Algorithmus des Pulsbreitenmodulationstyps geregelt wird, wobei ein Steuerungsparameter, der einen Regelungssollwert oder eine mit einem Regelungssollwert mindestens einer Phase (7, 8, 9) assoziierte Pulsdauer umfasst, modifiziert wird, der sich in einem Nichtlinearitätsbereich eines Nomogramms (ABQ, ABQ1) befindet, das einen Regelungssollwert mit einem Steuerungswert einer Phase assoziiert oder das eine mit einem Regelungssollwert assoziierte Pulsdauer mit einer Steuerungspulsdauer einer Phase assoziiert, indem der Wert des Parameters derart modifiziert wird, dass er in einem Linearitätsbereich des Nomogramms liegt, und der Steuerungsparameter jeder der Phasen (7, 8, 9) auf die gleiche Weise modifiziert wird, **dadurch gekennzeichnet, dass** das Verfahren umfasst:
a) einen ersten Schritt (40), während dem mindestens ein durch das Nomogramm (ABQ, ABQ1) mit dem Steuerungsparameter assoziierter Korrekturwert bestimmt wird;
b) einen zweiten Schritt (41), während dem eine Gesamtheit von Abweichungen zwischen jedem der Korrekturwerte und dem Steuerungswert bestimmt wird; und
c) einen dritten Schritt (42), während dem der mit der schwächsten Abweichung assoziierte Korrekturwert ausgewählt wird, ein Regelungswert für jede Phase bestimmt wird, indem die mit dem Korrekturwert assoziierte Abweichung von dem Steuerungsparameter abgezogen wird, falls der Korrekturwert kleiner ist als der Steuerungsparameter, der sich in einem Nichtlinearitätsbereich befindet, oder indem die mit dem Korrekturwert assoziierte Abweichung dem Steuerungsparameter hinzugefügt wird, falls der Korrekturwert größer ist als der Steuerungsparameter, der sich in einem Nichtlinearitätsbereich befindet, und bestimmt wird, ob sich jeder Steuerungsparameter in einem Nichtlinearitätsbereich des Nomogramms (ABQ, ABQ1) befindet;
wobei, falls sich der Regelungswert aller Phasen (7, 8, 9) während eines Schritts (43) in einem Linearitätsbereich des Nomogramms (ABQ, ABQ1) befindet, neue Steuerungsparameter, die die Regelungswerte umfassen, an eine Regelungsvorrichtung übertragen werden, die geeignet ist, den mehrphasigen Richter zu steuern;
wobei, falls während eines Schritts (44) sich der Regelungswert mindestens einer Phase (7, 8, 9) in einem Nichtlinearitätsbereich des Nomogramms (ABQ, ABQ1) befindet und falls mehr als ein Wert in der Gesamtheit der Abweichungen fortbesteht, die vorher ausgewählte Abweichung gestrichen wird und der dritte Schritt c) wiederholt wird;
wobei, falls während eines Schritts (45) sich der Regelungswert einer Phase (7, 8, 9) in einem Nichtlinearitätsbereich des Nomogramms (ABQ, ABQ1) befindet und falls die Gesamtheit der Abweichungen leer ist, die Steuerungsparameter ausgewählt werden und der Regelungswert der Phase im Nichtlinearitätsbereich berechnet wird, indem die schwächste Abweichung von dem Steuerungsparameter der Phase abgezogen wird, falls der mit der schwächsten Abweichung assoziierte Korrekturwert kleiner ist als der Steuerungsparameter der Phase, oder indem die schwächste Abweichung dem Steuerungsparameter der Phase hinzugefügt wird, falls der mit der schwächsten Abweichung assoziierte Korrekturwert größer ist als der Steuerungsparameter der Phase, und neue Steuerungsparameter, die den Regelungswert und jeden Steuerungsparameter der anderen Phasen umfassen, an eine Regelungsvorrichtung übertragen werden, die geeignet ist, den mehrphasigen Richter zu steuern;
wobei, falls während eines Schritts (46) sich ein Steuerungswert von mindestens zwei Phasen (7, 8, 9) in einem Nichtlinearitätsbereich des Nomogramms (ABQ, ABQ1) befindet und falls die Gesamtheit der Abweichungen leer ist, unterschiedliche Kombinationen von Korrekturwerten, die jeweils einen Regelungsvektor bilden, bestimmt werden, jeder Regelungsvektor in einen zweidimensionalen Regelungsvektor transformiert wird, ein Steuerungsparametervektor, der den Steuerungsparameter jeder der Phasen umfasst, in einen zweidimensionalen Referenzvektor transformiert wird, der quadratische Fehler jedes zweidimensionalen Regelungsvektors in Bezug auf den zweidimensionalen Referenzvektor bestimmt wird und der mit dem kleinsten Fehler assoziierte zweidimensionale Regelungsvektor bestimmt wird; und
umfassend einen Schritt (47), während dem der mit dem kleinsten Fehler assoziierte zweidimensionale Regelungsvektor in einen Steuerungsparametervektor transformiert wird und die Kombination der Steuerungsparameter an eine Regelungsvorrichtung übertragen wird, die geeignet ist, den dreiphasigen Richter zu steuern.

2. Steuerungsoptimierungssystem (20) für einen mehrphasigen Stromrichter (2), **dadurch gekennzeichnet, dass** es Mittel zum Einsatz eines Steuerungsverfahrens nach Anspruch 1 derart umfasst, dass der mehrphasige Stromrichter ein im Wesentlichen ausgeglichenes Spannungssystem bereitstellt.

3. System zur Steuerung (1) der Spannung eines mehrphasigen Stromrichters für den Einsatz eines Verfahrens nach Anspruch 2, **dadurch gekennzeichnet, dass** es eine Regulierungsvorrichtung (10) umfasst, die geeignet ist, für jede Phase einen Regelungssollwert zu erzeugen, wobei ein Steuerungsoptimierungssystem (20) einen Regelungssollwert empfängt, der von der Regulierungsvorrichtung bereitgestellt wird und geeignet ist, den Richter (2) zu steuern, wobei das Optimierungssystem einen ausgehend von dem Regelungssollwert erarbeiteten Regelungswert derart bereitstellt, dass der mehrphasige Stromrichter ein im Wesentlichen ausgeglichenen Spannungssystem bereitstellt.

## Claims

1. Method of control of a polyphase power converter driven by an algorithm of the pulse width modulation type, in which a control parameter comprising a drive setpoint value or a pulse duration associated with a value of drive setpoint of at least one phase (7, 8, 9), situated in a non-linearity zone of a chart (ABQ, ABQ1), which associates a drive setpoint value of a drive value of a phase or which associates a pulse duration assoiciated with a drive setpoint value to a drive pulse duration of a phase is modified, by modifying the value of said parameter so that it is in a linearity zone of the chart, and the drive parameter of each of the phases (7, 8, 9) is modified in the same way, **characterised in that** the method comprises:
a) a first step (40), during which at least one corrective value associated by the chart (ABQ, ABQ1) to the drive parameter is determined;
b) a second step (41) during which a set of differences between each of the corrective values and the drive parameter are determined; and
c) a third step (42) during which the corrective value associated with the lowest difference is selected, a drive value for each phase is determined by subtracting the difference associated with said corrective value of the drive parameter if the corrective value is less than the drive parameter situated in a non-linearity zone or by adding the difference associated with said corrective value to the drive parameter if the corrective value is greater than the drive parameter situated in a non-linearity zone, and it is determined if each drive parameter is situated in a non-linearity zone of the chart (ABQ, ABQ1);
wherein if the drive value of all the phases (7, 8, 9) is situated in a linearity zone of the chart (ABQ, ABQ1) during a step (43), new drive parameters comprising said drive values are transmitted to a drive device capable of driving the polyphase converter;
wherein if the drive value of at least one phase (7, 8, 9) is situated in a non-linearity zone of the chart (ABQ, ABQ1) and if it subsists more than one value in the set of differences, during a step (44), the difference selected before is removed and said third step c) is repeated;
wherein if the drive value of a phase (7, 8, 9) is situated in a non-linearity zone of the chart (ABQ, ABQ1), and if the set of differences is empty, during a step (45), the drive parameters are selected and the drive value of the phase in the non-linearity zone is calculated by subtracting the lowest difference from the drive parameter of the phase if the corrective value associated with the lowest difference is less than the drive parameter of the phase or by adding the lowest difference to the drive parameter of the phase, if the corrective value associated with the lowest difference is greater than the drive parameter of the phase, and new drive parameters comprising said drive value are transmitted and each drive parameter of the other phases are transmitted to a drive device capable of driving the polyphase converter;
wherein if a drive parameter of at least two phases (7, 8, 9) is situated in a non-linearity zone of the chart (ABQ, ABQ1) and if the set of differences if empty, during a step (46), different combinations of corrective values are determined, each forming a drive vector, each drive vector is transformed into a two-dimensional drive vector, a drive parameter vector comprising the drive parameter of each of the phases is transformed into a reference two-dimensional vector, the quadratic error of each two-dimensional drive vector is determined with respect to the reference two-dimensional vector, and the two-dimensional drive vector associated with the smallest error is determined; and
comprising a step (47) during which the two-dimensional drive vector associated with the smallest error is transformed into a drive parameter vector and the combination of drive parameters is transmitted to a drive device capable of driving the three-phase converter.

2. System for optimising a drive (20) for a polyphase power converter (2), **characterised in that** it comprises means for implementing a drive method according to claim 1, so that the polyphase power converter delivers a substantially balanced voltage system.

3. Voltage drive system (1) of a polyphase power converter for implementing a method according to claim 2, **characterised in that** it comprises a regulation device (10) capable of generating, for each phase, a drive setpoint value, a drive optimisation system (20) receiving a drive setpoint value delivered by the regulation device and capable of driving the converter (2), the optimisation system delivering a drive value developed from the drive setpoint value so that the polyphase power converter delivers a substantially balanced voltage system.
